# EUROPEAN PATENT APPLICATION

(11) **EP 3 460 315 A1**
(43) Date of publication of application: **27.03.2019**
(21) Application number: 17799122.1
(22) Date of filing: 24.04.2017
(51) Int. Cl.: F21S 8/10, F21V 31/00, F21W 101/10, F21Y 115/10

(54) **VEHICULAR LIGHT**

(30) Priority: 16.05.2016 JP 2016097562
(71) Applicant: Mitsubishi Electric Corporation, Chiyoda-ku Tokyo 100-8310 (JP)
(72) Inventor: NODA Hideo, Tokyo 100-8310 (JP); MASUDA Akio, Tokyo 100-8310 (JP); KAWASHITA Ryota, Tokyo 100-8310 (JP)
(74) Representative: Sajda, Wolf E.
(86) International application number: PCT/JP2017/016146
(87) International publication number: WO 2017/199692

(57) **Abstract**

The present invention is to provide a vehicle-mounted lamp fitting which can efficiently suppress fogging due to condensation of a light transmissive cover.

Provided are: a lamp chamber (23) composed of a light transmissive cover (2) and a case (3); a dehumidification element (7) mounted on the case (3); and a humidity detection element (8) mounted on the inside of the light transmissive cover (2) of the lamp chamber (23). The dehumidification element (7) mounted on the case (3) is controlled by detection of the humidity detection element (8) mounted on the inside of the light transmissive cover (2) of the lamp chamber (23) to efficiently suppress fogging due to condensation of the light transmissive cover (2).

## Description

### Technical Field

The present invention relates to vehicle-mounted lamp fittings such as headlamps and, more particularly, relates to a dehumidification configuration.

### Background Art

In vehicle-mounted lamp fittings such as headlamps, moisture potentially contained in resin constituting each member and moisture entered from the outside by expansion and contraction of air in a vehicle-mounted lamp fitting may generate condensation at a low temperature portion in the vehicle-mounted lamp fitting, the expansion and contraction of air being generated by repeating lighting-ON and lighting-OFF of a light source in the vehicle-mounted lamp fitting.

More particularly, a lens (front lens) in front of the vehicle-mounted lamp fitting, which is exposed to the outside air and emits light of a light source ahead of a vehicle, is a portion that often becomes a lower temperature than other portions; and condensation is liable to be generated on the inside of the lens.

Unfortunately, since the lens is transparent, a small waterdrop due to condensation water generated on the inside thereof is liable to be visually checked as fogging and merchantability of the vehicle-mounted lamp fitting is impaired.

Incidentally, in the vehicle-mounted lamp fitting with a complicated shape which becomes a part of a recent vehicle bodyline, a difference in height of the temperature distribution of air in the vehicle-mounted lamp fitting is large and it is liable to generate a low temperature portion; and accordingly, condensation on the low temperature portion is liable to be actualized.

Furthermore, a new light source like an electric discharge lamp and a light emitting diode (LED) is smaller in power of lighting-ON than a conventional light source like a light bulb that heats a tungsten filament; and thus, a temperature rise of the entire vehicle-mounted lamp fitting becomes slower.

Accordingly, the expansion and contraction of air in the vehicle-mounted lamp fitting are reduced and the moisture entered in the vehicle-mounted lamp fitting is less liable to be discharged to the outside. As a result, the moisture is liable to be accumulated in the vehicle-mounted lamp fitting and condensation is liable to be actualized.

Incidentally, in a conventional vehicle-mounted lamp fitting, generally, hydrophilic defogging coating is applied on the inside of the lens, so that moisture due to condensation does not become a small grain of waterdrop, that is, does not become fogging.

As a countermeasure for preventing the aforementioned fogging, for example, in a vehicle-mounted lamp fitting according to Patent Document 1, a dehumidification element that discharges moisture to the outside is provided in the vehicle-mounted lamp fitting of an inner space of a headlamp and the inside of the vehicle-mounted lamp fitting is dehumidified together with lighting-ON of a light source, whereby a reduction in defogging coating to be applied on a front lens thereof can be achieved.

However, since the dehumidification element is driven together with the lighting-ON of the light source, when the inner face of the front lens has been clouded already by condensation, it takes time to complete the dehumidification. Furthermore, for example, even in a period in which an outside air temperature in summertime or the like is high and condensation is less liable to be generated on the front lens, the dehumidification element is always driven together with the lighting-ON of the light source; and accordingly, the life of the dehumidification element is reduced and unnecessary power is consumed.

In a vehicle-mounted lamp fitting according to Patent Document 2, a proposal is presented that a property that changes a resistance value due to humidity absorbed by an electrolyte member of a dehumidification element is used as a humidity sensor and the dehumidification element is driven when the humidity in the vehicle-mounted lamp fitting increases.

According to this, since the dehumidification element is driven only when the humidity in the vehicle-mounted lamp fitting increases, a reduction in the life of the dehumidification element and a consumption in unnecessary power can be suppressed.

However, for example, even in the period in which an outside air temperature in summertime or the like is high and condensation is less liable to be generated on a front lens, the dehumidification element is driven during an increase in outside air humidity due to rainfall or the like; and accordingly, the life of the dehumidification element is reduced and unnecessary power is consumed.

### Related Art Document

### Patent Document

Patent Document 1: JP 2014-127 381 A
Patent Document 2: JP 5 705 377 B2

### Summary of the Invention

### Problems to be Solved by the Invention

The vehicle-mounted lamp fitting disclosed in the aforementioned conventional Patent Document 1 discharges the moisture in the vehicle-mounted lamp fitting by the dehumidification element together with the lighting-ON of the light source of the vehicle-mounted lamp fitting; however, a problem exists in that it takes time to remove fogging due to the condensation generated on the inner face of the front lens before lighting-ON of the vehicle-mounted lamp fitting.

Furthermore, even when the fogging due to the condensation is not generated on the front lens, the dehumidification element is driven; and accordingly, a problem exists in that the life of the dehumidification element is reduced and unnecessary power is consumed.

Moreover, in the vehicle-mounted lamp fitting disclosed in Patent Document 2, the dehumidification element is likely to be driven even when fogging due to the condensation is not generated on the front lens; and accordingly, a problem exists in that the life of the dehumidification element is reduced and unnecessary power is consumed.

The present invention has been made to solve the above described problem, and an object of the present invention is to provide a vehicle-mounted lamp fitting which can efficiently suppress fogging due to condensation of a front lens serving as a light transmissive cover of the vehicle-mounted lamp fitting.

### Means for Solving the Problems

According to the present invention, there is provided a vehicle-mounted lamp fitting including: a lamp chamber composed of a light transmissive cover and a case; a dehumidification element mounted on the case; and a humidity detection element mounted on the inside of the light transmissive cover of the lamp chamber. The dehumidification element is controlled by detection of the humidity detection element.

### Advantageous Effect of the Invention

According to the vehicle-mounted lamp fitting according to the present invention, the dehumidification element mounted on the case of the lamp chamber is controlled by the detection of the humidity detection element mounted on the inside of the light transmissive cover of the lamp chamber, whereby there can be obtained the vehicle-mounted lamp fitting that can efficiently suppress fogging due to condensation of the light transmissive cover.

### Brief Description of the Drawings

- FIG. 1: is a sectional view showing a vehicle-mounted lamp fitting according to Embodiment 1 of the present invention;
- FIG. 2: is a plan view of the moisture releasing side of a dehumidification element in the vehicle-mounted lamp fitting according to Embodiment 1 of the present invention;
- FIG. 3: is a plan view of the dehumidification side of the dehumidification element in the vehicle-mounted lamp fitting according to Embodiment 1 of the present invention;
- FIG. 4: is a sectional view taken along the line IV-IV of FIG. 2 of the moisture releasing side of the dehumidification element in the vehicle-mounted lamp fitting according to Embodiment 1 of the present invention;
- FIG. 5: is a sectional view showing the dehumidification element in the vehicle-mounted lamp fitting according to Embodiment 1 of the present invention;
- FIG. 6: is a sectional view showing moving paths of a hydrogen ion and an electron in dehumidification reaction of the vehicle-mounted lamp fitting according to Embodiment 1 of the present invention;
- FIG. 7: is a plan view in which a condensation detection sensor in the vehicle-mounted lamp fitting according to Embodiment 1 of the present invention is viewed from the inside;
- FIG. 8: is a sectional view taken along the line VIII-VIII of FIG. 7 of the condensation detection sensor in the vehicle-mounted lamp fitting according to Embodiment 1 of the present invention;
- FIGS. 9: are pattern drawings, each showing a forming method of an electrode in the vehicle-mounted lamp fitting according to Embodiment 1 of the present invention;
- FIG. 10: is a plan view viewed from the inside, which shows a different configuration of the condensation detection sensor in the vehicle-mounted lamp fitting according to Embodiment 1 of the present invention;
- FIG. 11: is a sectional view taken along the line XI-XI of FIG. 10 of the condensation detection sensor in the vehicle-mounted lamp fitting according to Embodiment 1 of the present invention;
- FIG. 12: is a plan view viewed from the inside, which shows different electrode patterns of the condensation detection sensor in the vehicle-mounted lamp fitting according to Embodiment 1 of the present invention;
- FIG. 13: is a circuit diagram showing a circuit that converts a signal of the condensation detection sensor in the vehicle-mounted lamp fitting according to Embodiment 1 of the present invention into a change in voltage;
- FIG. 14: is a perspective view showing a different configuration of the condensation detection sensor in the vehicle-mounted lamp fitting according to Embodiment 1 of the present invention;
- FIG. 15: is a sectional view showing a different configuration of the vehicle-mounted lamp fitting according to Embodiment 1 of the present invention;
- FIG. 16: is a sectional view showing a vehicle-mounted lamp fitting according to Embodiment 2 of the present invention;
- FIG. 17: is a plan view viewed from the outside, which shows a condensation detection sensor in the vehicle-mounted lamp fitting according to Embodiment 2 of the present invention;
- FIG. 18: is a sectional view taken along the line S-S of FIG. 17 showing the condensation detection sensor in the vehicle-mounted lamp fitting according to Embodiment 2 of the present invention;
- FIG. 19: is a plan view viewed from the inside, which shows the condensation detection sensor in the vehicle-mounted lamp fitting according to Embodiment 2 of the present invention;
- FIG. 20: is a front view showing a heat conductive element in the vehicle-mounted lamp fitting according to Embodiment 2 of the present invention; and
- FIG. 21: is a sectional view showing a vehicle-mounted lamp fitting according to Embodiment 3 of the present invention.

### Modes for Carrying Out the Invention

### Embodiment 1

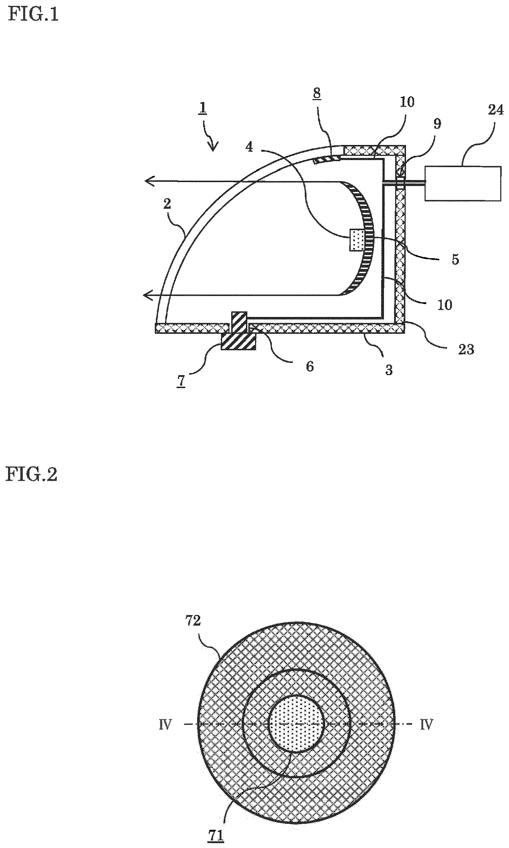

Hereinafter, Embodiment 1 of the present invention will be described based on FIG. 1 to FIG. 5. Then, in each of the drawings, identical or equivalent members and portions will be described with the same reference numerals (and letters) assigned thereto. FIG. 1 is a sectional view showing a vehicle-mounted lamp fitting according to Embodiment 1 of the present invention. FIG. 2 is a plan view of the moisture releasing side of a dehumidification element in the vehicle-mounted lamp fitting according to Embodiment 1 of the present invention.

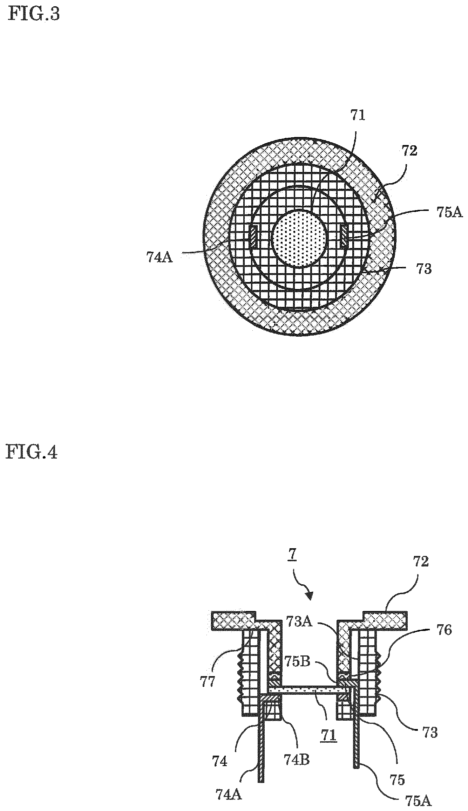

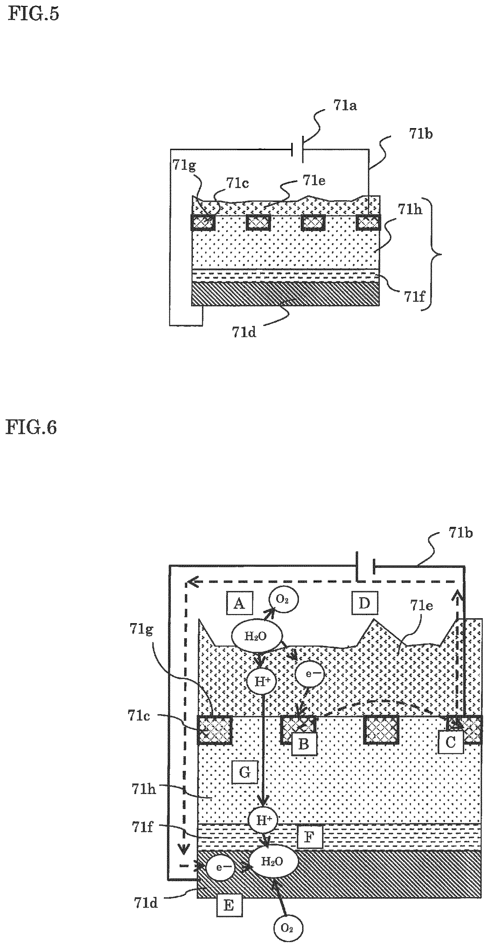

FIG. 3 is a plan view of the dehumidification side of the dehumidification element in the vehicle-mounted lamp fitting according to Embodiment 1 of the present invention. FIG. 4 is a sectional view taken along the line IV-IV of FIG. 2 of the moisture releasing side of the dehumidification element in the vehicle-mounted lamp fitting according to Embodiment 1 of the present invention. FIG. 5 is a sectional view showing the dehumidification element in the vehicle-mounted lamp fitting according to Embodiment 1 of the present invention.

A vehicle-mounted lamp fitting 1 is, for example, a headlamp and is configured such that, in a lamp chamber 23 formed by a front lens that is a light transmissive cover (hereinafter, referred to as "front lens") 2 and a case 3, a light source 4 constituted by, for example, an LED placed on an optical axis extending in a front/back direction of a vehicle and a reflecting mirror 5 that reflects light from the light source 4 constituted by the LED toward the front lens 2 are contained.

In a configuration example of FIG. 1, a mounting hole 6 is formed in the bottom face of the case 3, a dehumidification element 7 is fixed to the mounting hole 6, and an electrical signal from the dehumidification element 7 is transmitted to an external control circuit 24 via a wire 10 that passes through a wire through hole 9 formed in the back face of the case 3.

Furthermore, for example, a resistance type condensation detection sensor serving as a humidity detection element (hereinafter, referred to as "condensation detection sensor") 8 is attached on the inner face of the front lens 2 of the inside of the lamp chamber 23 and the electrical signal from the external control circuit 24 is transmitted via the wire 10 that passes through the hole 9.

FIG. 2 to FIG. 4 show an example of the configuration of the dehumidification element 7. The dehumidification element 7 is manufactured by using a dehumidification membrane 71 that is stamped in a circle of Ø 8.2 mm by means of a molding die. Hereinafter, a method of manufacturing the dehumidification element 7 will be described.

The dehumidification element 7 is a structure in which a housing 73, an anode side power supply body 74, the dehumidification membrane 71, a cathode side power supply body 75, a gasket 76, and a flange 72 are integrally stacked. In the dehumidification element 7, the dehumidification membrane 71 is arranged such that a face where an anode is present comes in contact with the anode side power supply body 74 and a face where a cathode is present comes in contact with the cathode side power supply body 75.

Regarding a material of which the dehumidification element 7 is made, the flange 72 and the housing 73 are formed by a graft copolymer (techno-polymeric acrylonitrile·ethylene-propylene-diene·styrene (AES) resin) subjected to graft copolymerization with styrene and acrylonitrile onto an ethylene-propylene copolymer; and one in which this material is formed by performing injection molding is used. The housing 73 is especially formed with male threads which are for screwing into a threaded hole provided in the wall face of an apparatus necessary for dehumidification.

Furthermore, two through holes for inserting through a power supply leg portion 74A of the anode side power supply body 74 and a power supply leg portion 75A of the cathode side power supply body 75 are provided in the housing 73. The anode side power supply body 74 is composed of a circular ring-shaped power supply portion 74B having an opening of Ø 6 mm and a slender plate-shaped power supply leg portion 74A that extends from the power supply portion 74B; and a through hole is provided in an end portion of the power supply leg portion.

The cathode side power supply body 75 is also a similar shape. The cathode side power supply body 75 is composed of a circular ring-shaped power supply portion 75B having an opening of Ø 6 mm and a slender plate-shaped power supply leg portion 75A that extends from the power supply portion 75B; and a through hole is provided in an end portion of the power supply leg portion.

The anode side power supply body 74 is a face in which dehumidification reaction occurs and uses one coated with a Pt plated film on titanium material as a material, for strong corrosion resistance property is particularly required. The cathode side power supply body 75 uses, for example, stainless steel material (SUS304). The gasket is a ring shape with a thickness of 500 µm having an opening portion of Ø 6 mm; and as a material, one in which a silicon sheet is stamped by a molding die is used.

The housing 73, the anode side power supply body 74, the dehumidification membrane 71, the cathode side power supply body 75, the gasket 76, and the flange 72 are stacked by using the aforementioned materials. The power supply leg portion 74A of the anode side power supply body 74 and the power supply leg portion 75B of the cathode side power supply body 75 are passed through a through hole 73A in the housing 73 to allow the power supply leg portions to come in contact with an external power supply 71a. After stacking these, a contact portion 77 between the flange 72 and the housing 73 is joined and integrated by ultrasonic joining.

The output of the ultrasonic joining is 40 kHz and the pressurizing force thereof is retained at 5 kgf/cm² for 0.2 sec. In the dehumidification element 7 manufactured by the aforementioned method, a part of a hermetically sealed space to be dehumidified is placed so as to be the face where the anode of the dehumidification element 7 is present and the power supply leg portion and the external power supply 71a are connected and energized, whereby dehumidification in the space to be dehumidified can be achieved.

The principle of the dehumidification element 7 will be explained by using FIG. 5. FIG. 5 is a sectional view showing the dehumidification element in the vehicle-mounted lamp fitting according to Embodiment 1 of the present invention. The dehumidification element 7 using electrolysis reaction of water widely uses a structure in which a solid high-polymer electrolyte membrane, electrodes, and catalyst layers are stacked and functions as the dehumidification element by applying voltage on the electrodes via the external power supply.

A cross section of a general dehumidification element is a structure like the one shown in FIG. 5. In the dehumidification element 7 in the present invention, sections excluding the external power supply 71a and the conducting wire 71b are collectively referred to as the dehumidification membrane 71. When voltage is applied to an anode 71c and a cathode 71d via conducting wires 71b from the external power supply 71a, reaction of Formula (1) occurs in an anode side catalyst layer 71e and reaction of Formula (2) occurs in a cathode side catalyst layer 71f.

2H₂O → O₂ + 4H⁺ + 4e⁻ ... (1)

O₂ + 4H⁺ + 4e⁻ → 2H₂O ... (2)

Since the reaction of Formula (1) occurred in the anode catalyst layer 71e near the anode 71 is accompanied with the generation of O₂, the anode 71c requires high corrosion resistance property against the oxygen and is generally plated with a noble metal film 71g. Furthermore, H⁺ generated by the reaction of Formula (1) reaches the cathode catalyst layer 71f via a solid high-polymer electrolyte membrane 71h and is used for the reaction of Formula (2).

Therefore, the anode 71c needs to be a porous body capable of passing H⁺ generated by the reaction of Formula (1). A typical view of moving paths of e⁻, H⁺, and O₂ to be generated by electrolysis reaction is shown in FIG. 6. FIG. 6 is a sectional view showing the moving paths of the hydrogen ion and the electron in the dehumidification reaction of the vehicle-mounted lamp fitting according to Embodiment 1 of the present invention. e⁻ moves to a position [B] of the anode 71c via the anode catalyst layer 71e by using a position [A] where the electrolysis reaction of water occurs as a starting point.

The anode 71c is one metal; and thus, the position [B] and a position [C] are electrically connected and the e⁻ moves to the position [C] having a contact with the conducting wire 71b. After that, e⁻ moves to a position [E] of the cathode 71d via the conducting wires 71b and a position [D] of the external power supply 71a.

This e⁻ is used for generation reaction of water shown in Formula (2) at a position [F]. H⁺ is generated by the electrolysis of water and passes through a position [G] in the solid high-polymer electrolyte membrane 71h via the anode catalyst layer 71e and is used for the reaction shown in Formula (2) at the position [F]. O₂ is discharged in the atmosphere after being generated by the electrolysis reaction of water. Furthermore, in the generation reaction of water at the position [F], O₂ is supplied from the atmosphere.

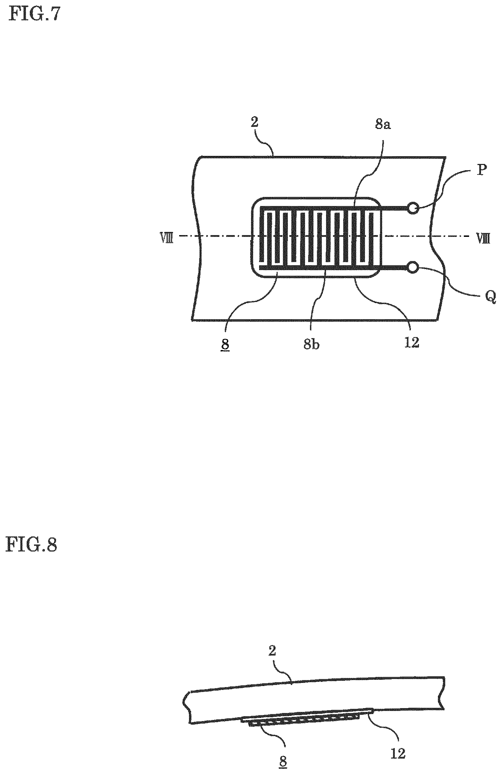

FIG. 7 and FIG. 8 show an example of the configuration of the condensation detection sensor. FIG. 7 is a plan view in which the condensation detection sensor in the vehicle-mounted lamp fitting according to Embodiment 1 of the present invention is viewed from the inside. FIG. 8 is a sectional view taken along the line VIII-VIII of FIG. 7 of the condensation detection sensor in the vehicle-mounted lamp fitting according to Embodiment 1 of the present invention.

The condensation detection sensor 8 is to detect a change in resistance between two facing electrodes as an electrical signal. An electrode P 8a and an electrode Q 8b are arranged on a moisture sensitive membrane 12 as shown in FIG. 7. The quality of the material of the electrode is permissible if it is, for example, copper, copper alloy, aluminum, aluminum alloy, stainless steel-base metal, or conductive one in which plating process of nickel, tin, or the like is coated on these metals and is preferable if it is a foil-shaped one.

Furthermore, any formation of the electrode is permissible if it is not easily peeled off, for example, etching, screen printing, adhesive joining of patterns, and the like. The quality of the material of the moisture sensitive membrane 12 is selected from: synthetic resin such as polyester, polyethylene, polypropylene, polystyrene, polycarbonate, polymethylmethacrylate, polyvinyl chloride, polyimide, polyurethane, paper phenol and the like; composite material such as glass epoxy; and inorganic material such as mica.

Then, one with heat resistance property is selected in consideration of an outside air temperature in summer and radiation heat from a light source; however, one with low thermal conductivity is desirable. The thickness of the moisture sensitive membrane 12 is thinned as much as possible so as to certainly transfer the temperature of the front lens 2.

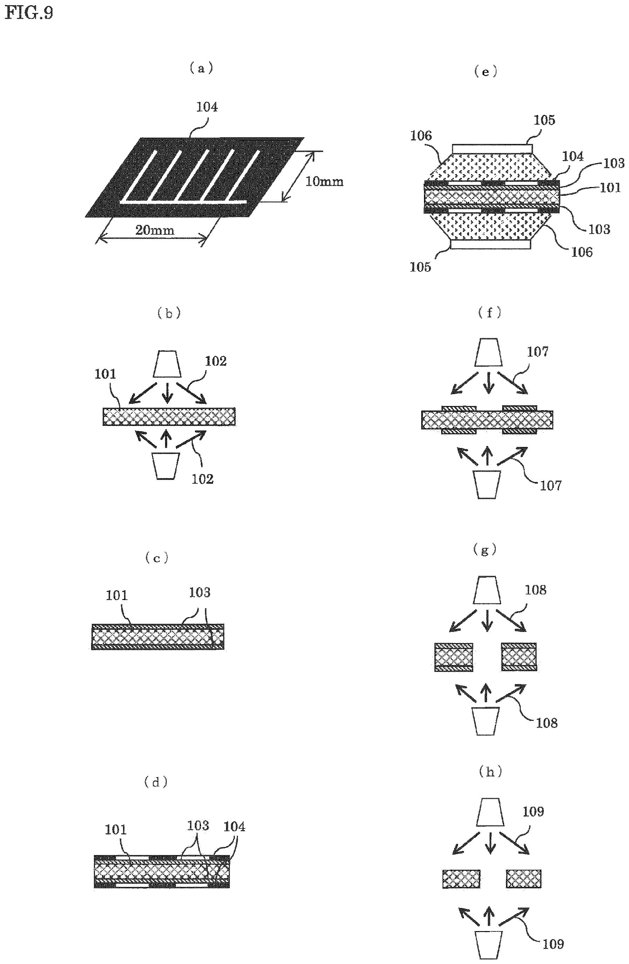

In this Embodiment 1, the condensation detection sensor 8 is formed by a photo-etching method. Procedures thereof are exemplarily shown in FIGS. 9.

FIGS. 9 are pattern drawings, each showing a forming method of the electrode in the vehicle-mounted lamp fitting according to Embodiment 1 of the present invention.

First, as shown in FIG. 9(a), an electrode shape is drawn by computer-aided design (CAD) to form a highly accurate pattern 104 by the output of a laser plotter. The outline of the electrodes is 10 mm × 20 mm.

Next, as shown in FIG. 9(b), when a resist 103 (photoresist) is applied on the surface of a metal thin sheet 101, in order to improve contact of the resist 103 to the surface of the metal thin sheet 101, degreasing and washing process which remove contamination and/or sticking of oils and fats of the surface of the metal thin sheet 101 is performed by using washing solution 102 such as hydrocarbon, acid, alkali, microbubble, and the like. Incidentally, the metal thin sheet 101 uses a C1020 copper plate with the outline of 20 mm × 30 mm and the thickness of 30 µm.

Subsequently, as shown in FIG. 9(c), the resist 103 is applied on both sides of the metal thin sheet 101.

Next, as shown in FIG. 9(d), the pattern 104 is stuck on both sides of the resist 103. In this case, the pattern 104 may be pressed from above by a glass or the like that transmits ultraviolet rays in a state where the pattern 104 is placed on the applying surface of the resist 103.

Next, as shown in FIG. 9(e), exposure 106 of the resist 103 is performed in accordance with the pattern 104 by using an ultraviolet ray light source 105. A blank portion (portion that transmits ultraviolet rays) of the pattern 104 is a portion in which the resist 103 is baked; and as shown in FIG. 9(f), the next development process 107 is performed to remove a portion in which the resist 103 is not baked.

Next, as shown in FIG. 9(g), etching 108 of the metal thin sheet 101 of the portion in which the resist 103 is not baked is performed by using etching solution, in this case, ferric chloride. The electrode shape is formed at this step; however, since the resist remains on the surface of the metal thin sheet 101, resist washing 109 is performed last as shown in FIG. 9(h). The electrode P 8a and the electrode Q 8b are formed by the above procedures.

Next, as shown in FIG. 7, the electrode P 8a and the electrode Q 8b are stuck on the moisture sensitive membrane 12 at equally spaced intervals so as not to be brought into contact with each other; however, the moisture sensitive membrane 12 uses porous alumina with the thickness of 0.3 mm and epoxy-based adhesive is used for adhesive. Incidentally, the moisture sensitive membrane 12 may use a high-polymer moisture sensitive membrane.

The condensation detection sensor 8 and the moisture sensitive membrane 12 combined in such a way are fixed on the inside of the front lens 2 by using the adhesive. However, as shown in FIG. 1, a position to be fixed has to be a position where light emitted from the light source 4 constituted by the LED is converged by the reflecting mirror 5 and does not block a path of light to be emitted in an optical axis direction and a position susceptible to a change in outside air temperature. In this Embodiment 1 of the present invention, the condensation detection sensor 8 and the moisture sensitive membrane 12 are fixed on the inner face of the upper side face of the front lens 2.

Each of the electrical signals of the dehumidification element 7 and the condensation detection sensor 8 passes through the wire through hole 9 via each wire 10 and is connected to the external control circuit 24.

Next, a dehumidification function which is for suppressing fogging of the front lens 2 will be described. Condensation is generated if water vapor contained in the air of the space in the vehicle-mounted lamp fitting comes in contact with a lower temperature than a saturation temperature (dew point temperature). If an outside air temperature is reduced, the front lens 2 which faces the outermost side in the vehicle-mounted lamp fitting is preferentially cooled; and thus, in order to preliminarily grasp this condensation, the condensation detection sensor 8 is arranged on the inner face of the front lens 2.

In the condensation detection sensor 8, a resistance value between the electrode P 8a and the electrode Q 8b is changed if condensation is started. This change in resistance value is detected by the control circuit 24. If the control circuit 24 detects this change in voltage, that is, the condensation of the front lens 2, the control circuit 24 applies a direct current voltage of 3 V on the dehumidification element 7 to start dehumidification in the vehicle-mounted lamp fitting.

This reduces humidity in the vehicle-mounted lamp fitting and stops power supply to the dehumidification element 7 by the control circuit at the time when the condensation in the front lens 2 disappears. When condensation is regenerated on the inner face of the front lens 2 due to a change of environment, the control circuit 24 is activated to start dehumidification; and thus, the generation of condensation in the vehicle-mounted lamp fitting can be suppressed.

In the aforementioned conventional Patent Document 2, the humidity sensor is provided to control the driving of the dehumidification device by a change in humidity in the vehicle-mounted lamp fitting; however, for example, in the case of environment of high outside air temperature and high humidity in summertime or the like, the humidity sensor reacts and the dehumidification device is likely to be driven even in a state where the front lens 2 does not reach a lower temperature than the saturation temperature (dew point temperature). On that regard, according to the present invention, since the dehumidification element 7 is driven only when condensation is generated on the front lens 2 regardless of external environment, it is efficient.

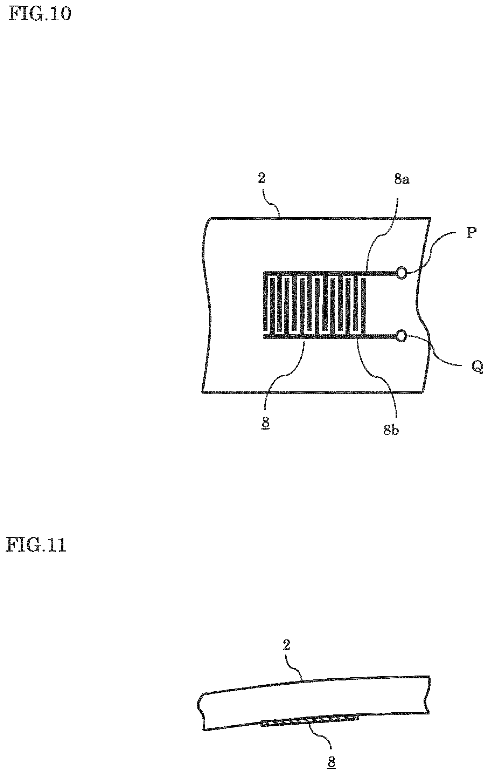

FIG. 10 and FIG. 11 are a different configuration of the condensation detection sensor in Embodiment 1 of the present invention. FIG. 10 is a plan view viewed from the inside, which shows the different configuration of the condensation detection sensor in the vehicle-mounted lamp fitting according to Embodiment 1 of the present invention. FIG. 11 is a sectional view taken along the line XI-XI of FIG. 10 of the condensation detection sensor in the vehicle-mounted lamp fitting according to Embodiment 1 of the present invention.

Essentially, the front lens 2 is an insulator and thus the formed electrode P 8a and the electrode Q 8b can also be directly stuck on the front lens 2. In the sticking method, in order to prevent a change in resistance value between the electrodes due to adhesion of dust, a double sided tacky type sheet is not desirable, but it is desirable to use epoxy-based adhesive and the like.

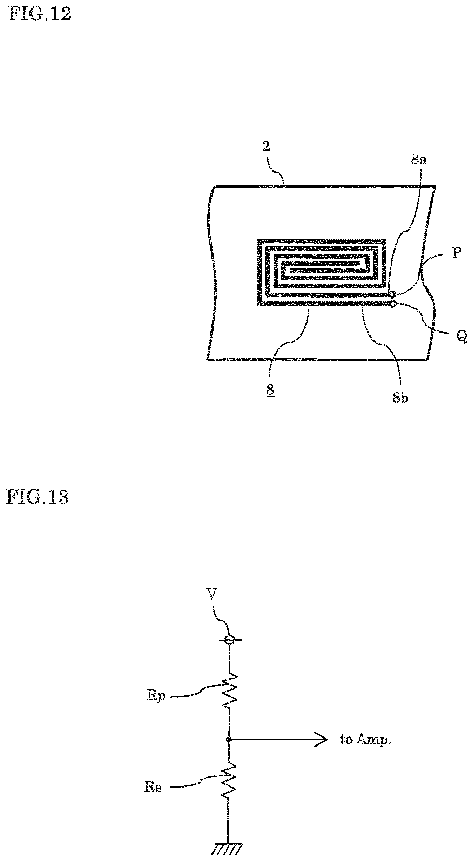

FIG. 12 shows different patterns of the electrode P 8a and the electrode Q 8b. FIG. 12 is a plan view viewed from the inside, which shows different electrode patterns of the condensation detection sensor in the vehicle-mounted lamp fitting according to Embodiment 1 of the present invention. The electrodes shown in FIG. 7 and FIG. 10 are a comb shape; however, as shown in FIG. 12, every mode such as spiral-shape is available, but it is desirable to form so that a gap between both the electrodes becomes constant.

FIG. 13 is an example of a circuit which converts a change in resistance between electrodes due to condensation of the condensation detection sensor 8 into voltage. FIG. 13 is a circuit diagram showing a circuit which converts a signal of the condensation detection sensor in the vehicle-mounted lamp fitting according to Embodiment 1 of the present invention into a change in voltage.

V is a voltage of 12 V to be supplied from the battery or may be a different voltage converted by a DC/DC converter as needed. Rp is pull-up resistance and has, for example, a value of 1 MΩ; when the condensation detection sensor 8 is dry and resistance between electrodes Rs is high, voltage of a portion P shows a value of V; however, when condensation is generated on the condensation detection sensor 8 and resistance between electrodes Rs is reduced, voltage of the portion P shows (Rs/(Rs+Rp)) × V. Incidentally, in addition to the resistance value between electrodes, capacitance between electrodes is also changed by the condensation of the condensation detection sensor 8; and thus, the humidity detection element can also detect and control the capacitance as a capacitance sensing type element.

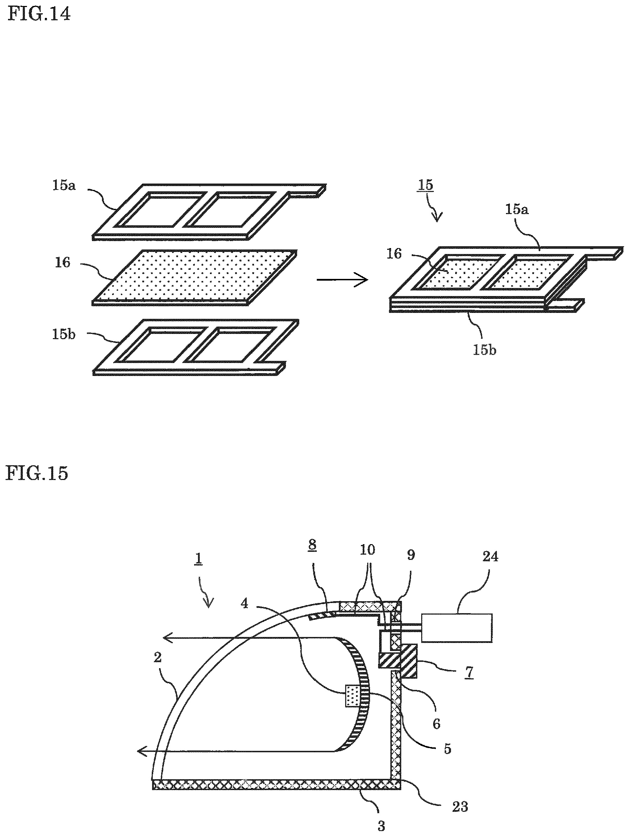

FIG. 14 is a perspective view showing a different configuration of the condensation detection sensor in the vehicle-mounted lamp fitting according to Embodiment 1 of the present invention. It is a mode in which a high-polymer membrane 16 is sandwiched by an electrode P 15a and an electrode Q 15b which serve as condensation detection sensor 15 and a change in dielectric constant due to moisture adsorption of the high-polymer membrane 16 is detected as capacitance.

The control circuit 24 detects the changed capacitance and drives the dehumidification element 7. Incidentally, in this mode of FIG. 14, the high-polymer membrane 16 is replaced with a moisture absorbency resistance sensing type sheet and a resistance value may be detected. Furthermore, a resistance sensing type sensor and a capacitance type sensor may be combined and used.

FIG. 15 is a sectional view showing a different configuration of the vehicle-mounted lamp fitting according to Embodiment 1 of the present invention. The dehumidification element 7 is placed on the back face of the case 3 in the vehicle-mounted lamp fitting. When it is difficult to arrange the dehumidification element 7 on the bottom face of the case 3 in the vehicle-mounted lamp fitting depending on a structure such as a vehicle, the dehumidification element 7 can be arranged on the back face of the case 3.

### Embodiment 2

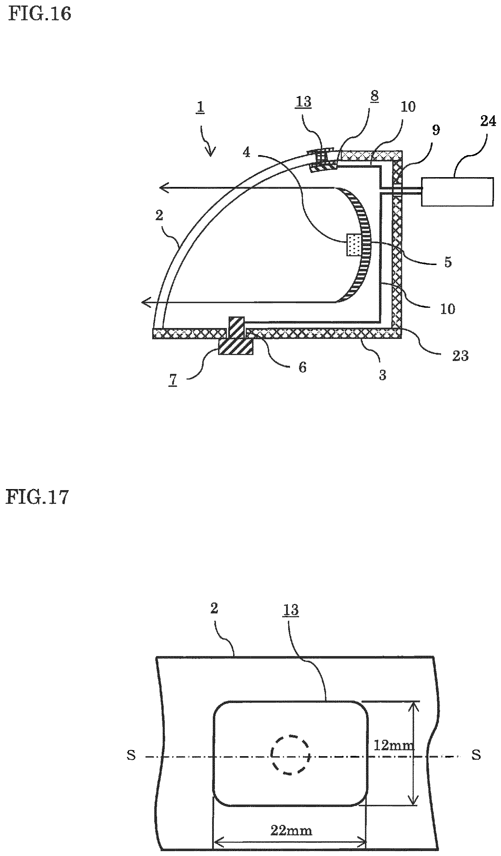

Hereinafter, Embodiment 2 of the present invention will be described based on FIG. 16 to FIG. 20. Then, in each of the drawings, identical or equivalent members and portions will be described with the same reference numerals (and letters) assigned thereto. FIG. 16 is a sectional view showing a vehicle-mounted lamp fitting according to Embodiment 2 of the present invention. FIG. 17 is a plan view viewed from the outside, which shows a condensation detection sensor in the vehicle-mounted lamp fitting according to Embodiment 2 of the present invention.

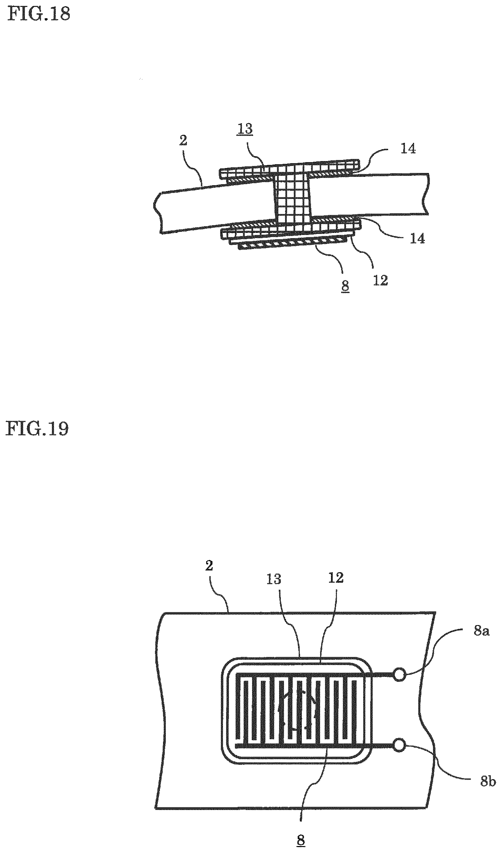

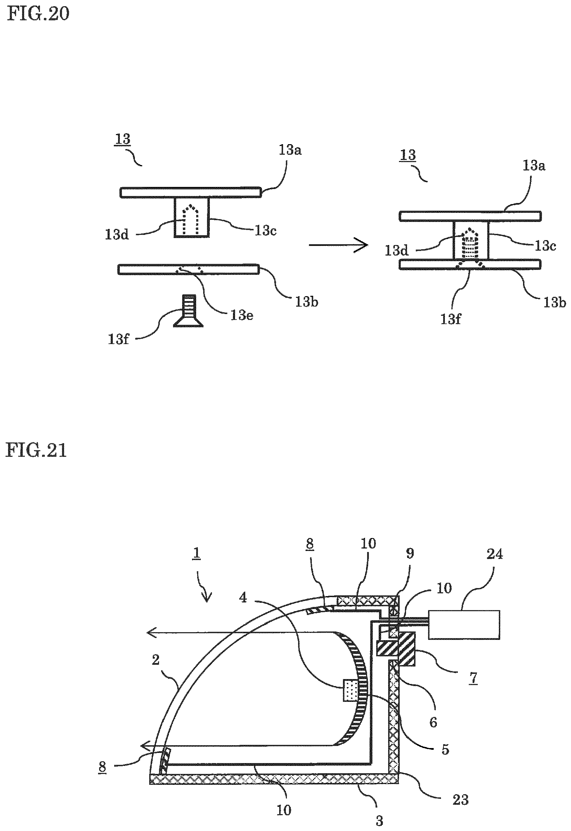

FIG. 18 is a sectional view taken along the line S-S of FIG. 17 showing the condensation detection sensor in the vehicle-mounted lamp fitting according to Embodiment 2 of the present invention. FIG. 19 is a plan view viewed from the inside, which shows the condensation detection sensor in the vehicle-mounted lamp fitting according to Embodiment 2 of the present invention. FIG. 20 is a front view showing a heat conductive element in the vehicle-mounted lamp fitting according to Embodiment 2 of the present invention.

A basic configuration is the same as the aforementioned Embodiment 1; however, a heat conductive element 13 is provided in a form passing through a front lens 2. The heat conductive element 13 is directly connected to a condensation detection sensor 8 and a detailed structure will be described by FIG. 17 to FIG. 20.

As shown in FIG. 20, the heat conductive element 13 is composed of two components of a heat conductive element 13a and a heat conductive element 13b; the heat conductive element 13a is provided with a boss 13c that protrudes to the heat conductive element 13b side; the boss 13c is formed with female threads 13d; the heat conductive element 13b is provided with, for example, a countersink 13e at a portion facing the female threads 13d; and the heat conductive element 13b is connected and fixed to the female threads 13d by screwing, for example, a flat head screw 13f through the countersink 13e.

These are decomposed, thereby allowing the boss 13c of the heat conductive element 13a to pass through a through hole 2A opened in the front lens 2 and to fix as shown in FIG. 18. The heat conductive element 13 is fixed via a resin gasket 14 in order that infiltration of moisture from the outside into the vehicle-mounted lamp fitting is prevented.

Then, the condensation detection sensor 8 is fixed in a form in which a moisture sensitive membrane 12 is sandwiched on a plane portion on the inner face side of the vehicle-mounted lamp fitting of the heat conductive element 13. A function in which an outside air temperature is quickly transmitted to the inside of the vehicle-mounted lamp fitting is required for the heat conductive element 13; and therefore, the use of copper or copper alloy and aluminum or aluminum alloy is desirable and, in order to improve corrosion resistance, it is desirable to perform plating process.

In this Embodiment 2, the heat conductive element 13 in which the quality of the material is C1020 and the size of a plane portion treated with nickel plating on the surface thereof is 12 mm × 22 mm; the moisture sensitive membrane 12 that uses porous alumina; and the condensation detection sensor 8 are each fixed by epoxy-based adhesive. A control circuit 24 and a control algorithm are the same as Embodiment 1.

According to the configuration of Embodiment 2 of the present invention, the heat conductive element 13 with high thermal conductivity is provided, whereby a reduction in outside air temperature can be transmitted to the condensation detection sensor 8 more quickly than the front lens 2 and the dehumidification element 7 can be driven at the timing faster than starting of condensation of the front lens 2; and therefore, fogging of the front lens 2 can be accurately suppressed.

### Embodiment 3

Embodiment 3 of the present invention will be described based on FIG. 21. Then, in each of the drawings, identical or equivalent members and portions will be described with the same reference numerals (and letters) assigned thereto. FIG. 21 is a sectional view showing a vehicle-mounted lamp fitting according to Embodiment 3 of the present invention.

As shown in FIG. 21, two condensation detection sensors 8 are provided and are arranged on an upper part and a lower part of a front lens 2. Those other than that are the same as the aforementioned Embodiment 1. According to Embodiment 3 of the present invention, condensation is detected at two places of the front lens 2; and therefore, condensation detection with higher accuracy can be achieved. Incidentally, combination with the configuration of Embodiment 2 of the present invention may be permissible.

Incidentally, the present invention can freely combine the respective embodiments and appropriately modify and/or omit the respective embodiments, within the scope of the present invention.

### Industrial Applicability

The present invention is suitable for achieving a vehicle-mounted lamp fitting which can efficiently suppress fogging due to condensation of a front lens of the vehicle-mounted lamp fitting.

### Description of Reference Numerals

- 1: Vehicle-mounted lamp fitting
- 2: Front lens
- 3: Case
- 4: Light source
- 7: Dehumidification element
- 8: Condensation detection sensor
- 8a: Electrode P
- 8b: Electrode Q
- 12: Moisture sensitive membrane
- 13: Heat conductive element
- 15: Condensation detection sensor
- 15a: Electrode P
- 15b: Electrode Q
- 16: High-polymer membrane
- 71: Dehumidification membrane
- 72: Flange
- 73: Housing
- 74: Anode side power supply body
- 75: Cathode side power supply body
- 76: Gasket

## Claims

1. A vehicle-mounted lamp fitting comprising:
- a lamp chamber composed of a light transmissive cover and a case;
- a dehumidification element mounted on the case; and
- a humidity detection element mounted on the inside of the light transmissive cover of the lamp chamber,
- wherein the dehumidification element is controlled by detection of the humidity detection element.

2. The vehicle-mounted lamp fitting according to claim 1,
wherein the humidity detection element is arranged on an upper part and a lower part of the light transmissive cover.

3. A vehicle-mounted lamp fitting comprising:
- a lamp chamber composed of a light transmissive cover and a case;
- a dehumidification element mounted on the case;
- a heat conductive structure provided by passing through the light transmissive cover; and
- a humidity detection element mounted on the heat conductive structure located on the inside of the light transmissive cover,
- wherein the dehumidification element is controlled by detection of the humidity detection element.

4. The vehicle-mounted lamp fitting
according to any one of claims 1 to 3,
wherein the humidity detection element is a resistance sensing type element.

5. The vehicle-mounted lamp fitting according to claim 4,
wherein the resistance sensing type element is a resistance type condensation detection sensor.

6. The vehicle-mounted lamp fitting according to claim 5,
wherein the resistance type condensation detection sensor is composed of a moisture sensitive membrane and two electrodes arranged on the moisture sensitive membrane.

7. The vehicle-mounted lamp fitting
according to any one of claims 1 to 3,
wherein the humidity detection element is a capacitance sensing type element.

8. The vehicle-mounted lamp fitting according to claim 7,
wherein the capacitance sensing type element is composed of a high-polymer membrane and two electrodes that sandwich the high-polymer membrane from both sides.

9. The vehicle-mounted lamp fitting
according to any one of claims 1 to 8,
wherein the dehumidification element is mounted on the bottom face of the case.

10. The vehicle-mounted lamp fitting
according to any one of claims 1 to 8,
wherein the dehumidification element is mounted on the back face of the case.

11. The vehicle-mounted lamp fitting
according to any one of claims 1 to 10,
wherein the dehumidification element is a structure in which a housing, an anode side power supply body, a dehumidification membrane, a cathode side power supply body, a gasket, and a flange are integrally stacked.
